(19) Europäisches Patentamt
European Patent Office
Office européen des brevets

(11) Numéro de publication : **0 086 170 B1**

(12) **FASCICULE DE BREVET EUROPÉEN**

(45) Date de publication du fascicule du brevet :
26.04.89

(51) Int. Cl.⁴ : **G 01 N 15/02**

(21) Numéro de dépôt : **83440010.3**

(22) Date de dépôt : **31.01.83**

(54) **Procédé de granulométrie interférentielle globale applicable notamment à des particules biologiques polydispersées.**

(30) Priorité : **03.02.82 FR 8201843**

(43) Date de publication de la demande :
**17.08.83 Bulletin 83/33**

(45) Mention de la délivrance du brevet :
**26.04.89 Bulletin 89/17**

(84) Etats contractants désignés :
**DE GB IT**

(56) Documents cités :
EP-A- 0 035 437
FR-A- 2 195 907
FR-A- 2 466 768
GB-A- 1 417 691
JOURNAL OF PHYSICS D, APPLIED PHYSICS, vol. 15, no. 1, janvier 1982, pages 1-3, Dorkin (GB); M.S. ATAKANT et al.: "Measurement of particle size and refractive index using crossed-beam laser anemometry"
APPLIED OPTICS, vol. 19, no. 3, fevrier 1980, pages 363-370, New York (US); W.D. BACHALO: "Method for measuring the size and velocity of spheres by dual-beam light-scatter interferometry"
APPLIED OPTICS, vol. 11, no. 11, novembre 1972, pages 2603-2612; W.M. FARMER: "Measurement of particle Size, number Density, and Velocity Using a Laser Interferometer"
APPLIED OPTICS, vol. 18, no. 20, 15 octobre 1979, pages 3489-3493; G. GREHAN et al.: "Mie theory calculations: new pr ogress, with emphasis on particle sizing"

(73) Titulaire : **Bajard, Jean**
**"Le Vallon" 5 rue Charles Baudelaire**
**F-67370 Griesheim-sur-Souffel (FR)**

**Meric, Jean-Paul**
**10, rue du Docteur Roux**
**F-75015 Paris (FR)**

(72) Inventeur : **Bajard, Jean**
**"Le Vallon" 5 rue Charles Baudelaire**
**F-67370 Griesheim-sur-Souffel (FR)**
Inventeur : **Meric, Jean-Paul**
**10, rue du Docteur Roux**
**F-75015 Paris (FR)**

(74) Mandataire : **Nuss, Pierre**
**10, rue Jacques Kablé**
**F-67000 Strasbourg (FR)**

OPTICAL ENGINEERING, vol. 18, no. 3, mai-juin 1979,
pages 236-242, Palosverdes (US); D.W. ROBERDS et
al.: "Use of a particle sizing interferometer to study
water droplet size distribution"
Le dossier contient des informations techniques
présentées postérieurement au dépôt de la demande
et ne figurant pas dans le présent fascicule.

EP 0 086 170 B1

**Description**

La présente invention concerne le domaine de l'analyse granulométrique de particules, et a pour objet un procédé de granulométrie interférentiel global, applicable notamment à des particules biologiques polydispersées.

Actuellement, les procédés pour la détermination des caractéristiques granulométriques, tels que les nombres, dimensions, et la courbe de granulométrie d'un ensemble de particules se trouvant ou mises en suspension dans un fluide sont généralement classés en deux catégories, à savoir, les procédés en flux, et les procédés globaux.

Dans les procédés en flux, les particules défilent une à une dans une cellule de mesure fournissant au passage de chaque particule une information liée à la taille de cette dernière. Le plus souvent, on procède à la mesure de la résistivité de la particule en milieu liquide (appareils Coulter) ou de ses propriétés optiques. Dans ce dernier cas, la particule traverse un espace éclairé, et la lumière absorbée ou diffusée est observée lors de son passage.

L'éclairement est réalisé par un faisceau unique ou par deux faisceaux cohérents produisant des franges d'interférence, le défilement de la particule devant le réseau de franges introduisant dans ce dernier cas une modulation périodique de la lumière diffusée.

La fréquence de cette modulation est liée à la vitesse de la particule, tandis que le taux de la modulation peut être lié à sa taille.

Ces procédés en flux connus présentent l'avantage de permettre l'examen des particules une à une favorisant ainsi la détermination de courbes de granulométrie. Cependant, les contraintes imposées par la mise en flux, qui consiste à réaliser une dilution élevée pour éviter le passage simultané de deux particules dans la zone de mesure, et la mise en circulation de la suspension à analyser, peuvent être incompatibles avec certaines déterminations, telles que, notamment, la dynamique de la formation d'agrégats. En outre, la cellule de mesure travaille souvent à des fréquences élevées pour permettre l'observation d'un nombre significatif de particules, limitant ainsi la quantité d'informations recueillies par particule, et entraînant des erreurs de natures diverses ne pouvant toujours être compensées par des calculs.

Les procédés globaux consistent en l'introduction simultanée d'un grand nombre de particules dans une cellule de mesure, qui fournit une information globale à partir de laquelle sont déterminés le nombre, la dimension et la répartition des particules concernées. Les principes de mesure utilisés peuvent être, soit mécaniques, tels que la sédimentation, soit principalement optiques, tels que la diffractométrie et la néphélémétrie.

Ces procédés présentent sur les procédés en flux connus l'avantage de ne requérir qu'une préparation simplifiée des échantillons à analyser, en particulier dans la mesure où ils rendent possible une analyse de populations granulaires polydispersées, c'est-à-dire formées de mélanges de plusieurs familles de particules monodispersées, un certain nombre de ces familles pouvant alors être analysé simultanément sans séparation. Ces procédés globaux permettent, en outre, l'obtention d'une mesure immédiatement représentative de la moyenne d'un grand ensemble de particules. Cependant, l'information fournie par la cellule est la superposition des informations élémentaires issues de chaque particule, et si cesdites informations ne sont pas suffisamment riches ou différenciées les unes des autres, leur discrimination est difficile, les variations des tailles interférant notamment avec les variations des nombres, en particulier dans les procédés globaux optiques. Ces procédés connus n'autorisent donc que des résultats limités en performances et en précision, sauf en cas d'application de moyens lourds et coûteux, qui en restreignent considérablement le champ d'application.

Il existe aussi des procédés de vélocimétrie, connus notamment par GB-A-1 417 691, permettant de mesurer non seulement les vitesses d'écoulement de particules, mais aussi, par extension de leur objet initial, de fournir des informations sur leur nombre, à condition que leurs tailles soient homogènes et étroitement distribuées autour d'une valeur moyenne.

Ces procédés mettent en œuvre deux ou plusieurs faisceaux cohérents que l'on fait se croiser au même endroit, et qui éclairent des particules en mouvement à cet endroit. La lumière diffractée par ces particules est recueillie et analysée, en vue de trouver les vitesses et les nombres des particules.

Les numérations obtenues par ce procédé sont de précision assez limitée, même si la condition évoquée plus haut sur l'homogénéité des tailles est remplie, cette imprécision n'étant pas essentielle en l'occurrence, puisque l'objet principal de ce procédé reste la vélocimétrie. Enfin, ces procédés n'attachent pas une importance déterminante au choix des angles solides dans lesquels les flux diffractés sont mesurés, ce qui les différencie du procédé selon l'invention, et explique en partie la différence de performances avec celui-ci, dans le domaine de la granulométrie.

Par ailleurs, il est également usuel de compter, de façon satisfaisante, des populations monodispersées, d'une distribution dimensionnelle assez resserrée autour d'une valeur moyenne normale, grâce à un procédé global optique, tel celui décrit dans FR-A-2 195 907, dans lequel les particules sont éclairées par un faisceau lumineux unique, et le flux diffracté est mesuré dans un angle solide particulier dit « de stationnarité », choisi de manière que le flux s'y trouvant diffracté reste sensiblement stationnaire lorsque la taille moyenne des particules à compter varie dans une certaine fourchette autour de sa valeur

3

EP 0 086 170 B1

normale. Le flux mesuré n'est représentatif que du nombre de particules à compter, du fait qu'il est indépendant des variations de taille de ces dernières.

Ce procédé n'est donc applicable au comptage de populations granulaires polydispersées qu'avec une importante restriction. En effet, en considérant un mélange de deux populations monodispersées de tailles moyennes différentes, il existe pour chaque population un angle solide de stationnarité qui permettrait effectivement de la compter si elle était seule, de sorte qu'on aboutit à deux angles solides de stationnarité distincts du fait que les tailles granulaires moyennes diffèrent. Il en résulte que dans chacun des deux angles solides sera mesuré un flux total égal à la somme d'un premier flux bien stationnaire en fonction de la taille de la population à laquelle correspond ledit angle, et d'un deuxième flux non stationnaire en fonction de la taille de l'autre population. Pour pouvoir utiliser le procédé, il faut donc connaître simultanément les tailles des deux populations considérées, et il en est de même dans le cas d'un mélange de plusieurs populations. La restriction à l'application de ce procédé est donc que les tailles de toutes les populations soient connues et, de plus, restent toutes ensemble parfaitement stables, ce qui n'est pas réalisé dans un grand nombre de cas pratiques.

L'amélioration des performances du procédé pourrait être envisagée par mise en œuvre de moyens supplémentaires déterminant les tailles en même temps que les nombres. Cependant, le coût de l'ensemble serait alors excessif en regard d'autres méthodes, à égalité de performances.

La présente invention a pour but de pallier ces inconvénients en donnant accès à des informations globales dans lesquelles les effets de taille et de nombres sont plus différenciés que dans les procédés connus, pour permettre de caractériser des populations granulaires polydispersées ou déterminer des courbes granulométriques avec une plus grande précision, par des calculs simples et dans des conditions plus économiques.

Elle a, en effet, pour objet un procédé de granulométrie interférentiel global applicable notamment à des particules biologiques polydispersées, c'est-à-dire comportant plusieurs populations particulaires mélangées, dans lequel les particules à analyser, mises en suspension dans un fluide au sein duquel elles sont réparties au hasard, défilent à travers un volume illuminé simultanément par plusieurs faisceaux de lumière cohérente d'axes convergents, qui y produisent un réseau de franges d'interférence, ledit volume et la concentration des particules qui le traversent étant tels qu'à chaque instant un grand ensemble de particules est éclairé simultanément, ces particules défilant à vitesse uniforme, le ou les flux diffractés par les particules étant mesurés dans un ou plusieurs angles solides auxquels correspondent des signaux de mesure présentant chacun une composante continue et une composante alternative, procédé caractérisé en ce que le ou les angles solides de mesure utilisés, d'une part, et la ou les valeurs d'interfrange du réseau de franges associés, d'autre part, sont choisis conjointement, soit de telle sorte que, pour une population particulaire donnée, à laquelle on fait correspondre un angle solide de mesure et une valeur d'interfrange déterminant elle-même une fréquence de modulation f associée, l'amplitude E(a) de la composante alternative de fréquence f du flux diffracté par ladite population dans l'angle solide correspondant, reste stationnaire quand le diamètre a des particules de ladite population varie autour d'une valeur normale, soit de telle sorte que, pour une population particulaire donnée, à laquelle on fait également correspondre un angle solide de mesure et une valeur d'interfrange déterminant elle-même une fréquence de modulation f associée, l'amplitude E(a) de la composante alternative de fréquence f du flux diffracté par chaque particule de diamètre a.de ladite population dans l'angle solide correspondant, soit proportionnelle au volume de la particule, lui-même proportionnel à $a^3$, l'expression E(a)/3 restant alors stationnaire lorsque le diamètre a de la particule varie.

L'interférence de deux faisceaux lumineux cohérents de longueur d'onde $\lambda$, dont les axes se coupent sous un angle $\theta$, permet l'obtention d'un interfrange dont la valeur est

$$\delta = \frac{\lambda}{2 \sin \frac{\theta}{2}}$$

En réalisant simultanément l'interférence de K faisceaux d'axes convergents, on peut former, en prenant deux faisceaux quelconques parmi les K, un nombre de combinaisons distinctes

$$\ell = \frac{K(K-1)}{2}$$

auxquelles correspondent un maximum de $\ell$ angles $\theta$ distincts et de ce fait autant de valeurs d'interfranges. En désignant par $\delta_1, \delta_2 ... \delta_i ... \delta_\ell$ ces valeurs d'interfranges et par V la vitesse de défilement des particules devant les franges, qui est supposée uniforme, il apparaît qu'aux diverses combinaisons possibles de ces K faisceaux 2 à 2 correspondent des fréquences de modulation sur les flux diffractés égales à

$$f_1 = \frac{V}{\delta_1}, \quad f_2 = \frac{V}{\delta_2} ... f_i = \frac{V}{\delta_i} ... \quad et \quad f_\ell = \frac{V}{\delta_\ell}.$$

4

Lors de l'interférence simultanée de tous ces faisceaux l'analyse harmonique de la modulation résultante conduit aux $\ell$ fréquences $f_1$, $f_2$, .... $f_i$, ... $f_\ell$ et fait correspondre une amplitude à chacune. Ces amplitudes désignées par $e_1$, $e_2$, ... $e_i$, ... et $e\,\ell$ sont fonction des nombres et des tailles des particules illuminées et de l'angle solide dans lequel est faite la mesure du flux diffracté.

Ce procédé permet donc l'obtention, dans le signal mesuré, d'un nombre de $\ell$ informations distinctes superposées provenant d'une seule prise de mesure dans un angle solide unique, alors qu'en l'absence de frange, usuelle dans les procédés antérieurs, une mesure par angle solide dans $\ell$ angles solides distincts aurait été nécessaire pour l'obtention d'une quantité égale d'informations.

En outre, les valeurs $e_i$ obtenues discriminent mieux les effets de taille des effets de nombre que les mesures de flux diffracté continu dans les procédés globaux non interférentiels. En effet, alors que le flux diffracté continu varie proportionnellement au nombre de particules éclairées quand ces dernières sont de taille uniforme, la composante alternative du flux modulé par des franges varie, dans la même hypothèse, proportionnellement à la racine carrée du nombre de particules éclairées. Une amplification relative des effets de taille par rapport aux effets de nombre peut donc être mise à profit, notamment pour le comptage de particules polydispersées et pour la détermination de courbes de granulométrie. En outre, la variation du taux de modulation de la lumière diffractée par une particule est fonction du rapport de la taille de cette dernière à l'interfrange, ainsi que de l'angle sous lequel la particule est observée.

Dans certaines conditions simplificatrices, on sait que ce taux de modulation varie suivant la formule

$$\frac{2\,J_1\left(\dfrac{2\,\pi a}{\delta}\right)}{\dfrac{2\,\pi a}{\delta}}$$

dans laquelle

$J_1$ est la fonction de Bessel d'ordre 1

a est le rayon de la particule

$\delta$ est l'interfrange.

Cette formule est donnée à titre d'exemple. Dans le cas général, le taux de modulation V (a, $\delta$, s) est donné par une expression plus complexe où intervient, en outre, l'angle d'observation s. Toutefois, la formule indiquée ci-dessus montre de manière simple qu'il existe des valeurs particulières du rapport a/$\delta$ pour lesquelles le taux de modulation devient nul ou du moins pratiquement nul, c'est-à-dire que pour un interfrange $\delta$ donné, il existe des tailles de particules pour lesquelles le flux diffracté ne présente pratiquement aucune modulation, ce qui signifie que ces particules ne contribuent pas à la formation de la composante alternative des flux modulés diffractés.

Cette propriété est particulièrement intéressante dans le cas de l'analyse de populations polydispersées en choisissant une valeur d'interfrange de manière à éliminer l'influence d'une population par annulation de sa contribution à la formation de la composante alternative du flux diffracté mesuré.

Conformément à une caractéristique de l'invention, le procédé consiste à associer, pour une population donnée, une valeur d'interfrange et un angle solide de mesure tels que l'amplitude E(a) de la composante alternative du flux qui est diffracté par ladite population dans ledit angle solide, reste elle-même stationnaire quand le diamètre a de la population varie autour d'une valeur normale.

Dans les procédés non interférentiels connus, tel celui décrit dans FR-A-2 195 907, des angles solides de stationnarité sont également utilisés, dans lesquels le signal continu représentant le flux diffracté total reste stationnaire lorsque les tailles de particule varient autour d'une valeur moyenne. Mais, dans le procédé conforme à l'invention, la stationnarité est recherchée uniquement sur la seule composante alternative du signal modulé mesurant le flux diffracté, et les angles solides dans lesquels cette propriété existe, sont différents de ceux où le signal continu total reste stationnaire. Cette différence peut se comprendre par référence à l'influence du rapport de l'interfrange à la taille des particules sur le taux de modulation.

Les nouveaux angles solides de stationnarité des composantes alternatives ainsi définis présentent l'avantage de fournir dans certains cas des informations précises de comptage sur des particules polydispersées, ces informations étant directement séparées les unes des autres du fait des propriétés discriminatoires précitées. Ces nouveaux angles solides de stationnarité peuvent donc permettre le comptage simultané de mélanges de particules monodispersées de tailles différentes, contrairement aux procédés antérieurs.

Un exemple caractéristique d'application du procédé conforme à l'invention concerne la numération des éléments figurés du sang, en particulier le comptage simultané des globules blancs et des plaquettes en présence des stroma, ou globules rouges lysés. Dans un sang de composition normale comportant par $mm^3$ $N_B = 8\,000$ globules blancs, $N_P = 300.000$ plaquettes, et $N_S = 5.000.000$ de globules rouges ou stroma, un angle solide de stationnarité en continu pour les globules blancs reçoit un flux diffracté provenant pour 50 % des globules blancs, pour 7 % des plaquettes, et pour 43 % des stroma. Du fait que cet angle solide n'est, en outre, pas stationnaire pour les plaquettes ni pour les stroma, le flux mesuré dans cette zone ne permet pas un comptage direct des globules blancs.

Un angle solide de stationnarité en alternatif pour les globules blancs, défini conformément à l'invention et associé à une valeur optimale d'interfrange, reçoit, avec les mêmes proportions entre $N_B$,

$N_P$, et $N_S$, un flux diffracté dont la composante alternative provient pour 99 % des globules blancs, l'influence des autres particules étant négligeable. Du fait que, dans cet angle solide, cette composante est indépendante des variations de taille des globules blancs, son amplitude représente directement leur nombre malgré la présence des autres particules.

Le procédé selon l'invention peut être appliqué à la détermination d'une courbe de granulométrie de la manière suivante :

En désignant par $a_1$ et $N_1$ le rayon moyen et le nombre des particules appartenant à la classe 1 et par $a_2 N_2$, ... $a_j N_j$, et $a_n$ et $N_n$ les rayons moyens et les nombres des particules des classes 2, j, et n, on peut faire interférer K faisceaux définissant

$$\ell = \frac{K(K-1)}{2}$$

fréquences harmoniques, en s'arrangeant pour que $\ell \geqslant n$.

Pour un angle solide unique de mesure du flux, l'analyse harmonique donne alors $\ell$ valeurs d'amplitudes $e_1 e_2 ..., e_i ... e_\ell$. Les valeurs $e_i$ sont liées aux nombres $N_j$ par des relations de la forme :

$$F(e_i) = \sum_{j=1}^{j=n} \alpha_{i,j} N_j$$

$F(e_i)$ étant une fonction des $e_i$, et

$\alpha i, j$ étant un coefficient dépendant de l'interfrange $\delta_i$ et de $a_j$ ainsi que de la position de l'angle solide de mesure utilisée. Cette relation peut s'écrire sous la forme matricielle suivante :

$$|F(e_i)| = M \cdot |N_j|,$$

et l'inversion de la matrice M donne les $N_j$ par :

$$|N_j| = M^{-1}|F(e_i)|$$

La meilleure discrimination du procédé conforme à l'invention est traduite par le fait que la matrice $M^{-1}$ est beaucoup plus diagonale que celle reliant les nombres aux éclairements mesurés dans les procédés globaux non interférentiels.

Pour optimiser l'application du procédé à la détermination de courbes de granulométrie, le calcul conduisant aux meilleurs choix d'interfranges et d'angles solides associés consiste à balayer systématiquement, d'une part, les diverses valeurs possibles d'interfranges, et, d'autre part, les diverses zones angulaires possibles, et à utiliser éventuellement plusieurs zones en combinaison, en particulier les zones de stationnarité relatives à n classes granulométriques distinguées, la combinaison des relations en découlant permettant de former une matrice $M_o$ optimale telle que son inverse $M_o^{-1}$ soit la plus diagonale possible, en tenant compte du niveau des signaux à mesurer et de la précision de leurs mesures.

Une telle optimisation est généralement effectuée par recherche programmée sur ordinateur, mais il est également possible, dans des cas particuliers, tels que celui de la numération simultanée des globules blancs et des plaquettes du sang en présence des stroma, d'aboutir à une définition de conditions de mesure particulièrement simples, et parfois directement représentatives de certains paramètres cherchés.

La mise en œuvre du procédé conforme à l'invention comporte essentiellement deux opérations, à savoir la détermination des valeurs des interfranges à utiliser, et la localisation des angles solides associés.

A cet effet, le procédé consiste avantageusement à effectuer le choix des valeurs $\delta$ d'interfrange en examinant de préférence les cas où $\delta \geqslant 2a$, a étant le rayon moyen des particules d'une population monodispersée. En outre, pour éliminer l'influence d'une population, par exemple perturbatrice, on choisira de préférence $\delta = 1,64$ a.

Le calcul d'un angle solide de stationnarité consiste à rechercher un angle solide $\Omega$ tel que, pour des particules de rayons extrêmes $a_1$ et $a_2$, l'expression

$$E(a) = \int_\Omega I(a, s) \times V(a, \delta, s) \, d\Omega$$

reste aussi stationnaire que possible lorsque a varie de $a_1$ à $a_2$, expression dans laquelle :

$I(a, s)$ est l'intensité diffractée par une particule de rayon a sous l'angle d'observation s, cet angle balayant complètement l'angle solide $\Omega$, lorsque cette particule est éclairée par deux faisceaux produisant l'interfrange $\delta$,

V (a, δ, s) est le taux de modulation de la lumière diffractée, qui est fonction, comme indiqué plus haut, des trois paramètres a, δ, et s.

L'expression E (a) peut se calculer à partir de formules approchées que divers auteurs ont proposées pour I (a, s) et V (a, δ, s), et notamment :

Farmer (Applied optics, novembre 1972)

Atakan et Jones (Applied optics, janvier 1982)

Bachalo (Applied optics février 1980)

Si avec un interfrange donné le calcul précédent ne permet pas de trouver un angle solide $\Omega$ dans lequel E (a) reste suffisamment stationnaire, le calcul est repris avec une valeur d'interfrange plus grande, jusqu'à détermination du couple optimal (δ, $\Omega$). Cette méthode convient particulièrement pour l'application du procédé à la numération de particules, que celles-ci soient polydispersées ou non.

L'expression E (a) peut aussi servir à l'application du procédé à la détermination d'une courbe de granulométrie. Dans ce cas, plutôt que de rechercher en priorité la stationnarité de E (a), on peut aussi, pour chaque classe de particules de rayon moyen $a_i$ i = I, n rechercher un couple $(\delta_i, \Omega_i)$ tel que E(a) soit maximale pour a = $a_i$ et aussi faible que possible pour a $\neq$ $a_i$. De cette manière on peut rechercher méthodiquement les conditions optimales évoquées plus haut, c'est-à-dire les meilleurs couples $(\delta_i, \Omega_i)$ i = I, n conduisant à la matrice la plus diagonale, et chercher des combinaisons comportant le nombre minimum de zones angulaires distinctes et de valeurs d'interfranges distinctes.

Bien entendu, on peut aussi affiner le calcul pour déterminer une granulométrie avec une meilleure précision en calculant non pas simplement E ($a_i$) à partir de la dimension moyenne $a_i$, mais plutôt la valeur moyenne prise par E (a) dans l'intervalle correspondant à la classe i, en intégrant E (a) dans cet intervalle. On peut encore tenir compte de la répartition granulométrique des particules de la classe i, si l'on peut la supposer connue à l'avance, pour calculer une valeur moyenne de E (a) plus pertinente pour cette classe i.

Tous ces procédés de calcul sont donnés à titre d'exemple, sans que leur énumération soit limitative.

Une variante du procédé permet la mesure du volume total d'un ensemble de particules, et donc d'un paramètre tel que l'hématocrite dans le cas des globules rouges du sang.

Ce procédé de mesure est caractérisé en ce qu'il consiste à associer, pour une population particulaire donnée, une valeur d'interfrange et un angle solide de mesure tels que l'amplitude de la composante alternative du flux diffracté E(a) par chaque particule de diamètre a de ladite population dans ledit angle solide soit proportionnelle au volume de cette particule, cet angle solide étant, de ce fait, tel que l'expression E(a)/a$^3$ reste stationnaire lorsque le diamètre a de la particule varie entre les valeurs extrêmes pour cette population.

La dimension moyenne des particules peut ainsi être déterminée en divisant leur volume total par leur nombre, ces deux paramètres ayant été obtenus séparément.

Bien entendu, l'invention n'est pas limitée au mode de réalisation décrit. Des modifications restent possibles, sans sortir pour autant du domaine de protection de l'invention.

## Revendications

1. Procédé de granulométrie interférentiel global applicable notamment à des particules biologiques polydispersées, c'est-à-dire comportant plusieurs populations particulaires mélangées, dans lequel les particules à analyser, mises en suspension dans un fluide au sein duquel elles sont réparties au hasard, défilent à travers un volume illuminé simultanément par plusieurs faisceaux de lumière cohérente d'axes convergents, qui y produisent un réseau de franges d'interférence, ledit volume et la concentration des particules qui le traversent étant tels qu'à chaque instant un grand ensemble de particules est éclairé simultanément, ces particules défilant à vitesse uniforme, le ou les flux diffractés par les particules étant mesurés dans un ou plusieurs angles solides auxquels correspondent des signaux de mesure présentant chacun une composante continue et une composante alternative, procédé caractérisé en ce que le ou les angles solides de mesure utilisés, d'une part, et la ou les valeurs d'interfrange du réseau de franges associés, d'autre part, sont choisis conjointement, soit de telle sorte que, pour une population particulaire donnée, à laquelle on fait correspondre un angle solide de mesure et une valeur d'interfrange déterminant elle-même une fréquence de modulation f associée, l'amplitude E(a) de la composante alternative de fréquence f du flux diffracté par ladite population dans l'angle solide correspondant, reste stationnaire quand le diamètre a des particules de ladite population varie autour d'une valeur normale, soit de telle sorte que, pour une population particulaire donnée, à laquelle on fait également correspondre un angle solide de mesure et une valeur d'interfrange déterminant elle-même une fréquence de modulation f associée, l'amplitude E(a) de la composante alternative de fréquence f du flux diffracté par chaque particule de diamètre a de ladite population dans l'angle solide correspondant, soit proportionnelle au volume de la particule, lui-même proportionnel à a$^3$, l'expression E(a)/a$^3$ restant alors stationnaire lorsque le diamètre a de la particule varie.

2. Procédé, suivant la revendication 1, caractérisé en ce qu'il consiste à choisir une valeur d'interfrange et un angle solide associé, de manière à éliminer l'influence d'une population par annulation de sa contribution à la formation de la composante alternative E(a) du flux diffracté mesuré.

## Claims

1. Method of analyzing particle size distribution of global samples by use of interferences, especially for polydispersed biological particles, that is to say comprising several mixed particle populations, in which the particles to be analyzed, suspended in a fluid in which they are randomly distributed, travel through a volume illuminated simultaneously by several beams of coherent light with convergent axes which produce a network of interference fringes therein, said volume and the concentration of the particles passing through it being such that, at any moment, a large group of particles is illuminated simultaneously, these particles travelling at constant speed, the flux or fluxes diffracted by the particles being measured in one or more solid angles with corresponding measurement signals each having a d. c. component and an alternating component, the method being characterised in that the solid angle or angles of measurement employed, on the one hand, and the inter-fringe value or values of the associated fringe network, on the other hand, are selected together, either in such a way that, for a given particle population provided with a corresponding solid angle of measurement and a corresponding inter-fringe value, which determines an associated modulation frequency f, the amplitude E(a) of the alternating component of frequency f of the flux diffracted by said population in the corresponding solid angle remains stationary when the diameter a of the particles of said population varies round a normal value, or in such a way that, for a given particle population also provided with a corresponding solid angle of measurement and a corresponding inter-fringe value, which determines an associated modulation frequency f, the amplitude E(a) of the alternating component of frequency f of the flux diffracted by each particle of diameter a of said population in the corresponding solid angle is proportional to the volume of the particle which, in turn, is proportional to $a^3$, the expression $E(a)/a^3$ thus remaining stationary when the diameter a of the particle varies.

2. Method according to claim 1, characterised in that it involves selecting an inter-fringe value and an associated solid angle which will eliminate the influence of a population by cancelling its contribution to the formation of the alternating component E(a) of the measured diffracted flux.

## Patentansprüche

1. Verfahren zur interferometrischen Teilchengrößenbestimmung von Gesamtproben, im besonderen zur Anwendung bei polydispergierten biologischen Teilchen, das heißt, bestehend aus mehreren gemischten Populationen von Teilchen, bei welchen die zu analysierenden Teilchen, die in einem Medium aufgeschlämmt werden, in welchem sie aufs Geratewohl verteilt sind, durch einen gleichzeitig durch mehrere Bündel kohärenten Lichts mit konvergierenden Achsen beleuchteten Raum ziehen, die dort ein Gitter von Interferenzstreifen erzeugen, wobei der besagte Raum und die ihn durchquerende Teilchenkonzentration so beschaffen sind, daß in jedem Augenblick eine große Menge Teilchen gleichzeitig beleuchtet ist, diese Teilchen mit gleichmäßiger Geschwindigkeit vorbeiziehen, der oder die durch die Teilchen gebrochene(n) Fluß/Flüsse in einem oder mehreren Raumwinkeln gemessen werden, welchen Meßsignale entsprechen, die je eine Gleichstromkomponente und eine Wechselstromkomponente aufweisen, dadurch gekennzeichnet, daß der oder die verwendeten Meß-Raumwinkel, einerseits, und der oder die Streifenabstandswerte des Gitters von assoziierten Streifen, andererseits, gemeinsam gewählt werden, entweder so, daß, bei einer gegebenen Teilchenpopulation, der man einen Meß-Raumwinkel und einen Streifenabstandswert entsprechen läßt, der selbst eine assoziierte Modulationsfrequenz f bestimmt, die Amplitude E(a) der Wechselstromkomponente der Frequenz f des durch die besagte Population in dem entsprechenden Raumwinkel gebrochenen Flusses feststehend bleibt, wenn der Durchmesser a der Teilchen der besagten Population um einen Normalwert variiert, oder so, daß bei einer gegebenen Teilchenpopulation, der man ebenfalls einen Meß-Raumwinkel und einen Streifenabstandwert entsprechen läßt, der selbst eine assoziierte Modularfrequenz f bestimmt, die Amplitude E(a) der Wechselstromkomponente der Frequenz f des durch jedes Teilchen mit dem Durchmesser a der besagten Population in dem ensprechenden Raumwinkel gebrochenen Flusses, zu dem Volumen des Teilchens proportional ist, das selbst zu $a^3$ proportional ist, wobei der Ausdruck $E(a)/a^3$ dann feststehend bleibt, wenn der Durchmesser a des Teilchens variiert.

2. Verfahren nach Anspruch 1, dadurch gekennzeichnet, daß es darin besteht, einen Streifenabstandswert und einen assoziierten Raumwinkel so zu wählen, daß der Einfluß einer Population durch Aufhebung ihres Beitrags zur Bildung der Wechselstromkomponente E(a) des gemessenen, gebrochenen Flusses eliminiert wird.